# EUROPÄISCHE PATENTSCHRIFT

(11) **EP 0 595 790 B1**
(45) Veröffentlichungstag und Bekanntmachung des Hinweises auf die Patenterteilung: **02.12.1998**
(21) Anmeldenummer: 94101025.8
(22) Anmeldetag: 09.04.1992
(51) Int. Cl.: H04N 7/00, H04N 7/084

(54) **Verfahren zum Übertragen einer digitalen Zusatzinformation in einer Zeile eines Fernsehsignals**
Method of transmitting a digital additional information in a line of a television signal
Méthode pour transmettre une information digitale additionnelle dans une ligne d'un signal de télévision

(30) Priorität: 18.04.1991 DE 4112712
(43) Veröffentlichungstag der Anmeldung: 04.05.1994
(62) Teilanmeldung aus: 92907677.6
(73) Patentinhaber: KONLE, Tilmar, 81247 München (DE)
(72) Erfinder: Ebner, Andreas, D-82256 Fürstenfeldbruck (DE); Schuster, Klaus, D-84032 Landshut (DE)

(56) Entgegenhaltungen:
- EP-A- 0 168 104
- EP-A- 0 372 555
- WO-A-90/14732
- DE-C- 3 840 054
- US-A- 4 156 253
- US-A- 4 191 969
- FOURTH INTERNATIONAL COLLOQUIUM ON ADVANCED TELEVISION SYSTEMS, OTTAWA, 25 - 29 JUNI 1990 Seiten 5A.6.1 - 5A.6.14 SUGIMORI ET AL. 'An -COMPATIBLE WIDE-ASPECT ADVANCED TELEVISION SYSTEM'
- NTZ Bd. 42, Nr. 9 , 1989 Seiten 544 - 554 SCHÖNFELDER 'PROBLEME EINES HDTV-FERNSEHSTUDIOS'

## Beschreibung

Die Erfindung betrifft ein Verfahren zum kompatiblen Übertragen einer digitalen Signalart-Zusatzinformation in einer Zeile eines Fernsehsignals.

### Stand der Technik

Zum kompatiblen Übertragen eines Farbfernsehsignals im Breitbildformat 16:9 mit herkömmlicher Zeilenzahl und Halbbildfrequenz (zukünftige PALplus-Norm) ist es bekannt, aus jeweils vier aufeinanderfolgenden Zeilen durch Interpolation drei Zeilen zu gewinnen, die in herkömmlichen Fernsehempfängern mit dem Bildformat 4:3 als sogenanntes Letterbox-Signal wiedergegeben werden.

WO-A-90 14 732 offenbart ein Verfahren, bei dem eine Signalart-Zusatzinformation in den schwarzen Rändern eines Letterbox-Signals mittels einer Schwarzwertanhebung entsprechender Zeilen übertragen wird.

### Erfindung

Der Erfindung liegt die Aufgabe zugrunde, eine Möglichkeit zur Übertragung von Signalart-Zusatzinformationen anzugeben, ohne die bisherige Belegung der vertikalen Austastlücke zu verändern oder zu beeinträchtigen. Diese Aufgabe wird durch das in Anspruch 1 angegebene Verfahren gelöst.

Damit ein Breitbildempfänger aus dem empfangenen Letterbox-Signal das ursprüngliche Farbfernsehsignal regenerieren kann, müssen für ihn digitale Zusatzinformationen in den Letterbox-Streifen übertragen werden, welche sich auf den ursprünglichen Bildinhalt beziehen. Da zumindest in einer Übergangszeit auf vorhandenen Fernsehkanälen sowohl herkömmliche als auch Letterbox-Signale übertragen werden, muß jede Signalart durch eine geeignete Kennung identifizierbar sein. Weitere Kennungen betreffen die Herkunft des Quellensignals (Videokamera oder Filmabtaster) sowie eine Aussage über das Vorhandensein von Bewegungen im Bildinhalt. Entsprechende Kennsignale (Statutsbits) müssen als Signalart-Zusatzinformationen übertragen werden.

Da sämtliche genannten Signalart-Zusatzinformationen (PALplus-Zusatzinformationen) exakt mit dem zugehörigen Bildinhalt korreliert sind, müssen sie starr verkoppelt mit dem Bildsignal übertragen werden. Hierfür stehen jedoch beim derzeitigen PAL-Standard in der vertikalen Austastlücke keine freien Zeilen zur Verfügung. Z.B. in Deutschland ist die Zeile Nr. 16 (Datenzeile) mit VPS-Signalen und anderen, rundfunkinternen Steuersignalen belegt. Die Zeilen Nr. 17, 18 und 19 sind mit Prüfsignalen belegt. In den Zeilen Nr. 11 bis 15 und Nr. 20 bis 21 wird Videotext übertragen. Zeile Nr. 22 ist für Störabstandsmessungen reserviert. In anderen europäischen Ländern werden andere Belegungen verwendet. Die Zeilen Nr. 1 bis 10 können mit Rücksicht auf die Synchronisations-Eigenschaften älterer Fernsehempfänger (noch) nicht mit Signalart-Zusatzsignalen belegt werden.

Vorteilhaft sollte ein 16:9-Empfänger für Letterbox-Signale (PALplus-Empfänger) zwischen den folgenden kompatiblen Fernseh-Signalarten unterscheiden können:
a) Standard-Signale;
b) Letterbox-Signale ohne Signalart-Zusatzinformationen;
c) Letterbox-Signale mit Signalart-Zusatzinformationen;
d) Quellsignal von Interlace-Abtastung (Kamera);
e) Quellsignal von Film-Abtastung ('progressives' Original);
f) Statischer oder dynamischer Bildinhalt.

Um diese Entscheidung sicher treffen und dementsprechend Decodierung und Wiedergabe wählen zu können, ist es vorteilhaft, wenn senderseitig eine entsprechende Kennung übertragen wird. Diese Signalart-Kennung sollte europaweit einheitlich sein. Vorteilhaft kann eine solche Signalart-Kennung in kompatibler Weise an Orten im FBAS-Signal übertragen werden, die unabhängig von der jeweiligen Norm gleichermaßen genutzt werden.

Vorteilhafte Weiterbildung des erfindungsgemäßen Verfahrens ergeben sich aus den Unteransprüchen 2 bis 8.

### Zeichnungen

Anhand der Zeichnungen werden Ausführungsbeispiele der Erfindung beschrieben. Die Zeichnungen zeigen in:
- Fig. 1: ein Diagramm für die Signalbelegung in der vertikalen Austastlücke eines PAL-Farbfernsehsignals;
- Fig. 2: ein Blockschaltbild einer Signalbegrenzerstufe eines 16:9-Empfängers für die erfindungsgemäß übertragenen digitalen Signalart-Zusatzinformationen;
- Fig. 3: einen Ausschnitt aus der Belegung einer bildinhaltsfreien Fernsehzeile mit einem herkömmlichen Datensignal;
- Fig. 4: einen Ausschnitt aus der Belegung einer bildinhaltsfreien Fernseh-Halbzeile mit einem erfindungsgemäß ausgebildeten Daten Signal;
- Fig. 5: ein Blockschaltbild eines empfängerseitigen Schaltungsdetails zur Fehlererkennung innerhalb der empfangenen, erfindungsgemäß übertragenen digitalen Signalart-Zusatzinformation.

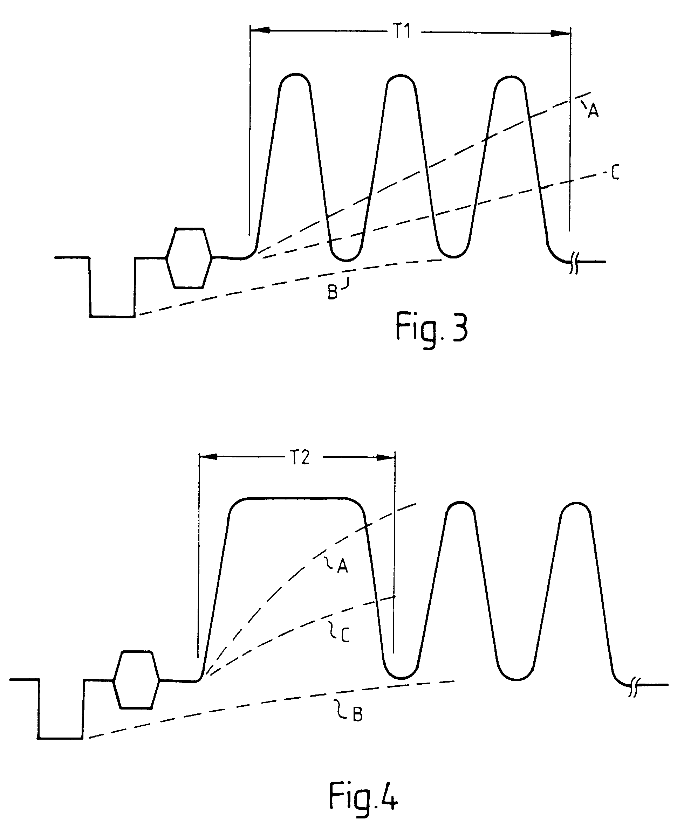

Die Figuren 3 bis 5 mit der nachfolgenden Beschreibung dienen lediglich zum besreren Verständnis der Erfindung, ohne jedoch die Erfindung als solche wiederzugeben.

### Ausführungsbeispiele

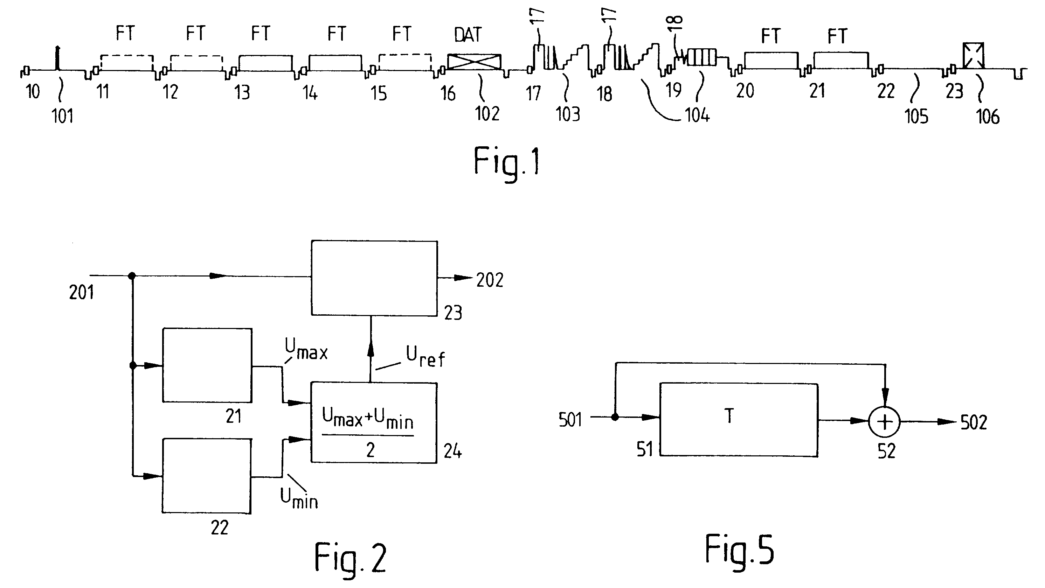

In dem Diagramm gemäß Fig. 1 ist die derzeitige Signalbelegung der vertikalen Austastlücke des ersten Halbbildes eines PAL-Farbfernsehsignals in Deutschland dargestellt, wobei die Nummern der betreffenden Fernsehzeilen entlang der Abszisse des Diagramms aufgetragen sind. Wie hieraus hervorgeht ist die erste Hälfte von Zeile Nr. 23 für die Belegung mit den PALplus-Signalart-Daten vorgesehen. In Zeile Nr. 10 wird ein Reflexions-Meßsignal 101 und in Zeile Nr. 16 werden Quellendaten 102 übertragen. Zeile Nr. 17 ist eine Quellenprüfzeile und die Zeilen Nr. 18 und 19 sind Abschnittsprüfzeilen 104. Zeile Nr. 22 dient zur Abschnitts-Rauschmessung 105 und die mit FT markierten Zeilen können Fernsehtext übertragen.
Die Nutzinformationsdaten der PALplus-Signalart-Daten 106 sind in Form mehrerer Datenpakete strukturiert. Dem ersten Datenpaket sind Einlaufinformationsdaten und Startinformationsdaten vorangestellt. Die Einlaufinformationsdaten dienen zur phasenrichtigen Rückgewinnung des Datentaktes der Nutzinformationsdaten im Empfänger. Als Einlaufinformationsdaten herkömmlicher Datensignale kommen beispielsweise acht Sinusschwingungen in Betracht, von denen in Fig. 3 nur drei Schwingungen dargestellt sind. Die Sinusschwingungen synchronisieren insbesondere eine PLL-Schaltung (Phase Locked Loop) im 16:9-Empfänger. Auf die Einlaufinformationsdaten der erfindungsgemäßen PALplus-Signalart-Daten wird später noch im einzelnen eingegangen.

Die Startinformationsdaten dienen zur Adressierung der Nutzinformationsdaten sowie zur selektiven Erfassung des Beginns der Nutzinformationsdaten im Empfänger. Der 16:9-Empfänger detektiert das Auftreten einer festgelegten Kennung, welche durch die Startinformationsdaten repräsentiert wird. Sobald der Empfänger die gesuchte Kennung im Empfangssignal feststellt, kann er die nachfolgenden Nutzinformationsdaten phasenrichtig aufnehmen und verarbeiten.

Die Nutzinformationsdaten sind beispielsweise biphase-codiert, was den Vorteil eines einfachen code-inhärenten Fehlerschutzes bietet. Ferner ist das Signal gleichspannungsfrei, was bei magnetischer Aufzeichnung günstig ist. Zur Erhöhung des Fehlerschutzes können die Nutzinformationsdaten mit erhöhter Redundanz übertragen werden, beispielsweise in der Weise, daß von jedem Datenpaket seine nicht-invertierte und invertierte Signal form sequentiell übertragen werden, wie anhand von Fig. 5 noch erläutert wird.

Fig. 2 zeigt den schematischen Aufbau der Signalbegrenzerstufe eines Empfängers für die PALplus-Signalart-Daten. Der Begrenzer 23 erhält an seinem analogen Eingang ein Videosignal 201, das in den dafür vorgesehenen Zeitabschnitten PALplus-Signalart-Datensignale erhält. Das ankommende Videosignal wird im Begrenzer 23 mit einer Referenzspannung Uref verglichen, welche an einem zweiten Eingang des Begrenzers 23 anliegt. Der Begrenzer erzeugt aus dem Bildsignalanteil des ankommenden Videosignals ein "digitales" Zufallssignal, das bei der nachfolgenden Auswertung unterdrückt wird. Für die Auswertung ist nur der vom Begrenzer 23 bearbeitete Datensignalanteil im ankommenden Videosignal von Interesse. Ist die Amplitude des im Videosignal enthaltenen Datensignals größer als die Referenzspannung Uref, so entspricht die Ausgangsspannung des digitalen Signalausgangs 202 dem logischen Zustand "high". Ist dagegen die Amplitude des Datensignals kleiner als die Referenzspannung Uref, so entspricht die Ausgangsspannung des digitalen Signal ausgangs 202 dem logischen Zustand "low". Da die fehlerfreie Begrenzung des Datensignals ausschließlich von der Referenzspannung Uref abhängt, ist die sorgfältige Bemessung der entsprechenden Baugruppen besonders wichtig. Hierzu wird einem ersten Spitzenspannungsmesser 21 ebenfalls das Videosignal zugeführt, welcher an seinem Ausgang zeitlich verzögert die maximale Signalamplitude Umax des Videosignals 201 liefert. In ähnlicher Weise arbeitet ein zweiter Spitzenspannungsmesser 22, dem ebenfalls das Videosignal 201 zugeführt wird. Am Ausgang des zweiten Spitzenspannungsmessers 22 liegt zeitlich entsprechend verzögert die minimale Signalamplitude Umin des Videosignals 201 an. Die bestmögliche Begrenzung des im Videosignal enthaltenen Datensignals liegt dann vor, wenn die Referenzspannung Uref bei 50 % der Summe von maximaler und minimaler Amplitude des Videosignals liegt. Die Referenzspannung Uref wird von einem Generator 24 erzeugt, dessen Eingängen die maximale Signalamplitude Umax und die minimale Signalamplitude Umin zugeführt werden. Am Ausgang des Generators 24 wird die Referenzspannung Uref bereitgestellt, deren Pegel bei einem Datensignal im eingeschwungenen Zustand bei (Umax + Umin)/2 liegt.

Bei jeder Änderung der Amplitude des Videosignals 201 finden in den Spitzenspannungsmessern 21 und 22 Einschwingvorgänge statt, die in Fig. 3 und Fig. 4 für Datensignale mit unterschiedlichen Einlaufinformationsdaten veranschaulicht sind.

Fig. 3 zeigt den Verlauf der in Datensignalen üblicherweise verwendeten Einlaufinformationsdaten. Der Spannungsverlauf der maximalen Signalamplitude Umax ist in Kurve A dargestellt, während Kurve B den Verlauf der minimalen Signalamplitude Umin veranschaulicht. Die Kurve C zeigt den Verlauf der Referenzspannung, die aus den maximalen und minimalen Signalspannungen gewonnen wird. Man erkennt, daß erst nach dem Zeitabschnitt T1 eine optimale Referenzspannung verfügbar ist. Da die Referenzspannung die Schneidschwelle des Begrenzers 23 bestimmt, läßt sich während des Intervalls T1 bei gestörten Signalart-Datensignalen keine fehlerfreie Umwandlung in digitale Signale erzielen. Im Gegensatz hierzu ist in Fig. 4 den Einlaufinformationsdaten ein Impuls der Dauer T2 vorangestellt, dessen Pegel der maximalen Amplitude Umax der Daten entspricht und dessen Breite ein Mehrfaches der Taktperiode der Daten umfaßt. Durch diesen Impuls wird die Funktion des ersten Spitzenspannungsmessers 21 derart beeinflußt, daß bereits nach einem wesentlich kürzeren Zeitabschnitt T2 die optimale Referenzspannung Uref erreicht wird. Damit arbeitet schon zu Beginn der Übertragung der eigentlichen Einlaufinformationsdaten der Begrenzer 23 des Datenempfängers optimal.

Fig. 5 zeigt eine einfache Anordnung zur Erkennung von Übertragungsfehlern bei der Auswertung von seriellen Datensignalen, deren Datenpakete in der vorstehend erwähnten Weise jeweils in nicht-invertierter und invertierter Signalform übertragen werden. Die gezeigte Anordnung enthält eine Verzögerungsschaltung 51, deren Signallaufzeit T der Zeitdauer entspricht, welche zur Übertragung eines Datenpaketes nötig ist. An den Eingängen einer der Verzögerungsschaltung 51 nachgeordneten Addierstufe 52 liegen jeweils zeitgleich und phasenrichtig ein nichtinvertiertes und ein invertiertes Signal eines Datenpaketes an. Während der Zeitdauer der Übertragung zusammengehöriger Datenpakete kann somit jeweils in der zweiten Hälfte des Übertragungszeitraumes eine einfache Fehlerprüfung durchgeführt werden, da während dieses Zeitraums bei der Übertragung fehlerfreier Datensignale am Ausgang 502 der Addierstufe 52 kein Signal auftritt. Falls in den Datenpaketen noch zusätzliche Fehlerschutzmaßnahmen, beispielsweise eine Biphase-Codierung, verwirklicht sind, können bei Auftreten von Fehlersignalen am Ausgang 502 der Addierstufe 52 entsprechende Korrekturmechanismen angewandt werden.

Wird ein Standard-PAL-Signal mit Letterbox-Streifen von einem 16:9-Empfänger empfangen, erlaubt die Signalart-Kennung die Betätigung einer Formatumschaltung, die eine formatfüllende Darstellung ohne Letterbox-Streifen bewirkt.

## Patentansprüche

1. Verfahren zum kompatiblen Übertragen einer Signalart-Zusatzinformation (106) in nicht zum vertikalen Rücklauf gehörenden Zeilen eines Fernsehsignals, wobei die Signalart-Zusatzinformation in verbesserten 16:9-Empfängern auswertbar ist, **dadurch gekennzeichnet,** daß als Signalart-Zusatzinformation in der von Bildsignalen freien Hälfte der ersten oder letzten aktiven Bildzeile von Fernsehbildern ein Datenpaket übertragen wird, welches Einlauf-, Start- und Nutzinformationsdaten enthält, wobei empfangsseitig die Einlaufinformationsdaten für die phasenrichtige Rückgewinnung des Datentaktes der Nutzinformationsdaten dienen und die Startinformationsdaten zur Adressierung der Nutzinformationsdaten sowie zur selektiven Erfassung des Beginns der Nutzinformationsdaten dienen und daß die Signalart-Zusatzinformation mindestens zwei der folgenden Fernseh-Signalarten umfaßt:
- Standard-Signal, das kein Letterbox-Signal ist und keine Bild-Zusatzinformationen enthält;
- Letterbox-Signal ohne Bild-Zusatzinformationen;
- Letterbox-Signal von Film-Quelle mit Bild-Zusatzinformationen;
- Letterbox-Signal von Kamera-Quelle mit Bild-Zusatzinformationen, insbesondere mit einer Unterscheidung zwischen als statisch und als bewegt geltendem Bildinhalt der Halb- oder Vollbilder.

2. Verfahren nach Anspruch 1, **dadurch gekennzeichnet,** daß die Einlaufinformationsdaten zu Beginn einen Impuls enthalten, dessen Amplitude dem maximalen Pegel der Daten entspricht und dessen Breite ein Mehrfaches der Taktperiode der Daten umfaßt.

3. Verfahren nach Anspruch 1 oder 2, **dadurch gekennzeichnet,** daß die Nutzinformationsdaten derart gesendet werden, daß von jedem Datenpaket seine nicht-invertierte und invertierte Signalform sequentiell übertragen wird und daß empfangsseitig zur Feststellung von Übertragungsfehlern zu jeder invertierten Signalform die zugehörige nicht-invertierte Signalform addiert (52) wird, wobei eine resultierende Signalsumme ungleich Null einen Übertragungsfehler indiziert.

4. Verfahren nach einem oder mehreren der Ansprüche 1 bis 3, **dadurch gekennzeichnet,** daß die Nutzinformationsdaten in Form mehrerer Datenpakete strukturiert sind.

5. Verfahren nach einem oder mehreren der Ansprüche 1 bis 4, **dadurch gekennzeichnet,** daß die Einlaufinformationsdaten Sinusschwingungen enthalten.

6. Verfahren nach einem oder mehreren der Ansprüche 1 bis 5, **dadurch gekennzeichnet,** daß die Nutzinformationsdaten mit erhöhter Redundanz übertragen werden.

7. Verfahren nach einem oder mehreren der Ansprüche 1 bis 6, **dadurch gekennzeichnet,** daß das Nutzinformationsdaten-Signal gleichspannungsfrei ist.

8. Verfahren nach Anspruch 7, **dadurch gekennzeichnet,** daß die Nutzinformationsdaten biphase-codiert sind.

## Claims

1. Process for the compatible transfer of signal mode supplementary information (106) in lines of a television signal not pertaining to vertical return action, in which context the signal mode supplementary information can be utilised in improved 16:9 receivers, characterised in that, as the signal mode supplementary information, a data package is transferred in the half of the first or last active picture line of television pictures which is free of picture signals, this data package containing run-in, start, and useful information data, in which context, on the reception side, the run-in information data serves for the phase-correct recovery of the data pulse of the useful information data and the start information for the addressing of the useful information, as well as serving for the active acquisition of the start of the useful information data, and that the signal mode supplementary information encompasses at least two of the following television signal modes:
- Standard signal, which is not a letterbox signal and does not contain any additional picture information;
- Letterbox signal without additional picture information;
- Letterbox signal from film source with additional picture information;
- Letterbox signal from camera source with additional picture information, in particular with a differentiation between the picture content of the half pictures or full pictures considered as static and as moving.

2. Process according to Claim 1, characterised in that the run-in information data at the beginning contain a pulse, the amplitude of which corresponds to the maximum level of the data and the width of which encompasses a multiple of the clock pulse period of the data.

3. Process according to Claims 1 or 2, characterised in that the useful information is transmitted in such a way that the non-inverted and inverted signal form from each data package is transferred sequentially, and that, on the reception side, in order to determine any transmission errors, the pertaining non-inverted signal form (52) is added to each inverted signal form, in which situation a resultant signal sum which does not equal zero indicates a transmission error.

4. Process according to one or more of Claims 1 to 3, characterised in that the useful information data is structured in the form of several data packages.

5. Process according to one or more of Claims 1 to 4, characterised in that the run-in information data contains sinus oscillations.

6. Process according to one or more of Claims 1 to 5, characterised in that the useful information data is transmitted with increased redundancy.

7. Process according to one or more of Claims 1 to 6, characterised in that the useful information data signal is free of direct voltage.

8. Process according to Claim 7, characterised in that the useful information data is biphase-coded.

## Revendications

1. Procédé pour la transmission compatible d'une information (106) supplémentaire en forme de signal dans des lignes qui ne font pas partie du retour vertical d'un signal de télévision, dans lequel l'information supplémentaire de type signal est exploitable dans des récepteurs 16:9 améliorés, caractérisé en ce qu'on transmet, en tant qu'information supplémentaire en forme de signal, dans les moitiés sans signaux d'image des première ou dernière lignes actives d'image de télévision, un paquet de données qui contient des données d'informations d'arrivée, de départ et utiles, de sorte que, du côté de la réception, les données d'information d'arrivée servent à la détection avec une phase correcte, de la cadence de donnée des données d'information utiles, et les données d'information de départ servent à l'adressage des données d'information utile, ainsi qu'à la détection sélective du début des données d'information utile et en ce que l'information supplémentaire en forme de signal comporte au moins deux des types suivants de signaux de télévision :
- Signal standard, qui n'est pas un signal de boîte à lettre et qui ne contient pas d'information supplémentaire d'image ;
- Signal de boîte à lettre sans information supplémentaire d'image ;
- Signal de boîte à lettre d'une source film avec des informations supplémentaires d'image ;
- Signal de boîte à lettre d'une source caméra avec des informations supplémentaires d'image, en particulier avec une distinction entre un contenu d'image statique et en mouvement des demi-images ou des images entières.

2. Procédé selon la revendication 1, caractérisé en ce que les données d'information d'arrivée comportent, au début, une impulsion dont l'amplitude correspond au niveau maximal des données et dont la largeur englobe un multiple de la période d'échantillonnage des données.

3. Procédé selon la revendication 1 ou 2, caractérisé en ce que les données d'information utile sont envoyées de façon telle que l'on transmet pour chaque paquet de données, en séquence, une forme de signal non inversé et une forme de signal inversé et en ce que, du côté du récepteur, pour déterminer des erreurs de transmission, à chaque forme de signal inversé on ajoute (52) la forme d'un signal non inversé correspondant de sorte qu'un signal somme résultant, qui est différent de zéro, indique une erreur de transmission.

4. Procédé selon une ou plusieurs des revendications 1 à 3, caractérisé en ce que les données d'information utile sont structurées sous la forme de plusieurs paquets de données.

5. Procédé selon une ou plusieurs des revendications 1 à 4, caractérisé en ce que les données d'information d'arrivée contiennent des oscillations de sinusoïde.

6. Procédé selon une ou plusieurs des revendications 1 à 5, caractérisé en ce que les données d'information utile sont transmises avec une redondance relevée.

7. Procédé selon une ou plusieurs des revendications 1 à 6, caractérisé en ce que le signal de données d'information utile ne comporte pas de tension continue.

8. Procédé selon la revendication 7, caractérisé en ce que les données d'information utile sont codées en biphase.
